# NEUE EUROPÄISCHE PATENTSCHRIFT

(11) **EP 0 338 236 B2**
(45) Veröffentlichungstag und Bekanntmachung des Hinweises auf die Entscheidung über den Einspruch: **02.05.2002**
(45) Hinweis auf die Patenterteilung: 19.06.1996
(21) Anmeldenummer: 89104164.2
(22) Anmeldetag: 09.03.1989
(51) Int. Cl.: F16C 13/00, F16C 32/06

(54) **Hydrostatisch innenabgestützte Walze**
Roll with internal hydrostatic support
Rouleau à support hydrostatique interne

(30) Priorität: 22.04.1988 DE 3813598
(43) Veröffentlichungstag der Anmeldung: 25.10.1989
(73) Patentinhaber: Eduard Küsters Maschinenfabrik GmbH & Co. KG, 47805 Krefeld (DE)
(72) Erfinder: Brendel, Bernhard, Dr., D-4155 Grefrath 2 (DE); Kubik, Klaus, D-4154 Tönisvorst 1 (DE); Küsters, Karl-Heinz, D-4150 Krefeld (DE)
(74) Vertreter: Palgen, Peter, Dr. Dipl.-Phys.

(56) Entgegenhaltungen:
- EP-A- 0 225 827
- EP-A- 0 252 251
- EP-A- 0 340 515
- WO-A-87/06660
- CH-A- 577 598
- DE-A- 2 629 185
- DE-A- 2 902 956
- US-A- 3 587 152
- US-A- 4 544 285

## Beschreibung

Die Erfindung bezieht sich auf eine hydrostatisch innenabgestützte Walze der dem Oberbegriff des Anspruchs 1 entsprechenden Art.

Eine solche Walze ist aus der CH-PS 577 598 bekannt. Die Stützelemente sind hierbei kolbenartig ausgebildet und in in der dem Walzspalt zugewandten Seite das Querhaupts ausgebildeten Zylinderbohrungen geführt. Von der unterhalb des Stützstempels in der Zylinderbohrung ausgebildeten Druckkammer führen Drosselbohrungen in die auf der dem Innenumfang der Hohlwalze zugewandten Seite der Stützstempel ausgebildeten Lagertaschen. Die Druckkammer und die Lagertaschen sind also miteinander verbunden, und es tritt Druckflüssigkeit aus der Druckkammer jedes Stützstempels in die (aus Stabilisierungsgründen meist vorhandenen mehreren) Lagertaschen über. Die Druckflüssigkeit strömt in einer geringen Menge über den Rand der Lagertaschen ab und bildet dort einen tragenden Flüssigkeitsfilm. so daß die Stützstempel im Betrieb frei von metallischer Reibung gegen den Innenumfang der Hohlwalze wirken.

Es kann eine einzelne Reihe von Stützstempein vorhanden sein, die einzeln unabhängig voneinander in einzelnen Gruppen oder gemeinsam mit Druckflüssigkeit versorgt werden. Bedarfsweise sind in einer Walze aber auch mehrere Reihen von Stützstempeln in Umfangsrichtung gegeneinander versetzt vorhanden.

Bei der aus der CH-PS 577 598 bekannten Ausführungsform wird die sich in dem Zwischenraum zwischen dem Innenumfang der Hohlwalze und dem Querhaupt sammelnde Leckflüssigkeit der Stützstempel abgeführt und durch einen Wärmetauscher temperiert und in einen Vorratsbehälter abgeleitet, von wo sie eine Pumpe entnimmt und unter Druck wieder den einzelnen Druckkammern unter den Stützstempeln zuführt.

Indem bei der bekannten Ausführungsform den einzelnen Stützelementen bzw. Gruppen von Stützefementen unterschiedliche Drücke zugeführt werden, kann ein bestimmtes Liniendruckprofil eingestellt werden. Durch die Wärmeübertragung von der durch den Wärmetauscher aufgeheizten oder abgekühlten Druckflüssigkeit auf den Innenumfang der Hohlwalze stellt sich eine bestimmte Temperatur am Außenumfang der Hohlwalze ein, die bei der vorstehend geschilderten Ausführung, bei der der Wärmetauscher die einzige Temperiereinrichtung bildet und allen Stützstempeln gemeinsam ist, über die Breite der Bahn gleichmäßig sein soll.

Wenn bei einer solchen Ausführung die Liniendruckverteilung geändert und an einem bestimmten Stützelement der Druck der Druckflüssigkeit beispielsweise erhöht werden muß, strömt bei diesem Stützelement zwischen Rand und Innenumfang der Hohlwalze mehr Druckflüssigkeit ab als vorher. Dadurch wird im Bereich dieses Stützelements mehr Wärme auf den Innenumfang der Hohlwalze übertragen und die Temperaturverteilung längs der Hohlwalze geändert. Die Wärmeübertragung hängt nämlich bei einer Anordnung der in Rede stehenden Art sehr stark von der zwischen dem Stützelement und dem Innenumfang der Hohlwalze abströmenden Flüssigkeitsmenge ab.

Das bedeutet: Druck und Temperatur lassen sich an einem bestimmten Stützelement nicht unabhängig voneinander ändern. Eine Änderung der Liniendruckverteilung zieht immer auch eine Änderung der Temperaturverteilung nach sich.

In Fig. 5 der CH-PS 577 598 ist eine Ausführungsform wiedergegeben, in der dieser Mißstand dadurch zu beheben versucht wurde, daß in den Zuleitungen zu den einzelnen Stützelementen bzw. Gruppen von Stützelementen jeweils einzelne zusätzlich zu dem Wärmetauscher vorhandene Zusatzheizungen vorhanden sind, mit weichen das durch den Wärmetauscher erzielte Temperaturniveau modifiziert werden kann. Dieses Verfahren ist bei höheren Ansprüchen nicht zufriedenstellend, weil die Zusatzheizung nur eine sehr träge Regelung der Temperaturverhältnisse ermöglicht und außerdem durch die bei einer Temperaturänderung geänderte Viskosität der Druckflüssigkeit die bei gleichem Druck an den Stützelementen überströmende Menge sich ändert und somit ein Eingriff in die Druckverhältnisse stattfindet. Eine wirkliche Entkopplung von Temperatur- und Druckverteilung ist also nicht gegeben.

Auch bei der DE-PS 29 02 956 erfolgt die Temperierung der Hohlwalze über die an den Stützstempeln austretende temperierte Druckflüssigkeit. Hier ist eine abschnittweise separat regelbare Zusatzheizung vorgesehen, bei der temperierte Druckflüssigkeit aus Sprühorganen gegen den Innenumfang der Hohlwalze gesprüht wird.

Bei der EP-OS 201 783 wird ebenfalls die Wärme über eine Temperierung der Druckflüssigkeit auf die Hohlwalze übertragen. Wenn die Temperaturverteilung geändert werden soll, wird die Menge der an einem bestimmten Stützstempel durchgesetzten Druckflüssigkeit geändert. Dadurch ändert sich der an dieser Stelle ausgeübte Druck. Um die dadurch eintretende Änderung der Liniendruckverteilung zu kompensieren, ist auf der gegenüberliegenden Seite des Querhaupts eine weitere Reihe von Stützelementen vorgesehen, die die eingetretene Änderung der Liniendruckverteilung automatisch ausgleichen. Auf diese Weise kann eine Änderung der Temperierung des Walzenmantels erfolgen, ohne daß die Temperatur der Druckflüssigkeit geändert werden muß.

Bei der DE-PS 25 03 051 schließlich sind die Stützelemente von der Temperierung ganz freigestellt und erfolgt diese durch eine auf der gegenüberliegenden Seite des Querhaupts ausgebildete Reihe von den Stützelementen ähnlich ausgebildeten Wärmeübertragungselementen, denen eine temperierte Druckflüssigkeit zugeführt wird.

Den drei letztgenannten Ausführungsformen ist gemeinsam, daß in dem ohnehin beengten Raum im Inneren der Hohlwalze zusätzliche Bauelemente untergebracht werden müssen, die zudem, wenn sie Bohrungen im Querhaupt erfordern, dieses in unerwünschter Weise schwächen. Der durch die zusätzlichen Elemente zustande kommende zusätzliche Aufwand ist erheblich.

Der Erfindung liegt die Aufgabe zugrunde, eine gattungsgemäße Walze so auszugestalten, daß auf einfache Weise die Liniendruckverteilung und die Temperaturverteilung längs der Hohlwalze unabhängig voneinander eingestellt werden können.

Diese Aufgabe wird durch die in Anspruch 1 wiedergegebene Erfindung gelöst.

Durch die Trennung der den Lagertaschen zugeführten Druckflüssigkeit von der der Druckkammer zugeführten Druckflüssigkeit bei gleichzeitiger Mengenregelung der den Lagertaschen zugeführten Druckflüssigkeit ändert sich bei einer Änderung der Stützkraft des Stützelements die über dessen Rand abströmende Druckflüssigkeitsmenge nicht mehr, was sonst, wenn diese Menge vom Stützdruck abhängig war, zu einer ungewollten Änderung der übertragenen Wärmemenge führte. Für den Stützdruck ist der Druck in der Druckkammer maßgeblich. Die Druckflüssigkeit in der Druckkammer tritt nicht in den Zwischenraum zwischen Hohlwalze und Querhaupt aus und ist somit an der Wärmeübertragung nicht beteiligt. Wenn der Druck in der Druckkammer erhöht wird, bleibt die in den Lagertaschen durchgesetzte Menge erhalten, deren Druck allerdings entsprechend dem Druck in der Druckkammer schwanken wird.

Auf diese Weise bleibt die von einem Stützelement übertragene Wärmemenge von Änderungen des Stützdrucks an diesem Stützelement unbeeinflußt. Es lassen sich also Liniendruckverteilung und Temperaturverteilung unabhängig voneinander einstellen, ohne daß es zusätzlicher Elemente in Gestalt von Heizelementen oder zusätzlicher Reihen von Sfützelementen zu Ausgleichszwecken bedürfte.

Der Gedanke, die den Lagertaschen zugeführte Druckflüssigkeit von der der Druckkammer zugeführten Druckflüssigkeit zu trennen und mengenzuregeln, ist an sich aus der EP-OS 252 251 bekannt. Bei dieser Schrift steht die getroffene Maßnahme jedoch unter dem Gesichtspunkt der Ersparnis an Pumpenenergie. Die Erfindung besteht darin, diesen Gedanken bei temperierten Walzen der in Rede stehenden Art einzusetzen und dadurch auf einfachem Wege zu einer beachtlichen Verbesserung der Funktion beheizter Walzen zu kommen.

In ihrer allgemeinsten Form wird die Erfindung verwirklicht, wenn jedem Stützstempel eine eigene Heizeinrichtung zugeordnet ist und die diversen Heiz einrichtungen unabhängig voneinander eingestellt werden können. Auf diese Weise wird ein Temperaturprofil erhalten, welches auch bei Änderungen des Druckprofils unbeeinflußt erhalten bleibt. In der Praxis steht meist ein einfacherer Fall im Vordergrund, bei welchem es darum geht, über die Arbeitsbreite eine bestimmte Temperatur möglichst gleichmäßig aufrechtzuerhalten, auch wenn sich die Liniendruckverteilung ändert.

Für einen solchen Fall kommt die vereinfachte Ausgestaltung nach Anspruch 2 in Betracht, bei welcher also nicht in jeder einzelnen Zuleitung eine separate Heizeinrichtung vorhanden ist, sondern eine gemeinsame Heizeinrichtung auf mehrere oder gar alle Stützelemente wirkt. Vorstellbar wäre beispielsweise eine Anordnung, bei der alle inneren Stützelemente der Walze an eine gemeinsame Heizeinrichtung angeschlossen sind, während die beiden äußeren Stützelemente je eigene Heizeinrichtungen aufweisen, um Randeffekte auszugleichen.

Die Anforderungen an die Gleichmäßigkeit und Konstanz der Temperatur sind in bestimmten Anwendungsfällen erheblich. Dies trifft beispielsweise bei Walzen zu, die in sogenannten Vlieskalandern eingesetzt werden, bei denen mit Temperaturen an der Oberfläche der Walze in der Größenordnung von 250° C gearbeitet wird und eine Temperaturkonstanz über die Arbeitsbreite in der Größenordnung von 1° gefordert wird. Dies ist bei einer Walzenlänge von mehreren Metern und nicht unerheblichen Arbeitsgeschwindigkeiten schwer darzustellen. Schon relativ geringfügige Effekte können Temperatureinflüsse einer kritischen Größenordnung hervorbringen. Dies gilt zum Beispiel für sogenannte Effekte zweiter Ordnung. Darunter soll verstanden sein, daß sich bei einer Änderung des Drucks die Größe des Spalts zwischen der Anlagefläche eines Stützelements und dem Innenumfang der Hohlwalze etwas ändert und damit auch der Anteil der durch die hydrodynamische Reibung der durch den Spalt hindurchtretenden Druckflüssigkeit entstehenden Wärme. Auch die Änderung der Viskosität bei unterschiedlichen Temperaturen der den Lagertaschen zugeführten Druckflüssigkeit kann den Spalt und die Wärmeverteilung beeinflussen.

Sollten durch solche Nebeneffekte sich Temperaturunterschiede längs der Hohlwalze ergeben. die bei dem Vorhandensein einer für mehrere Stützelemente gemeinsamen Heiz einrichtung die gieichmäßige Temperatur stören, so kann gemäß der Erfindung der gemeinsamen Heizeinrichtung in der Zuleitung zu einem Stützelement eine Einzel Heizeinrichtung nachgeschaltet sein.

Diese Einzel Heizeinrichtung dient nur zur Unterdrückung der Effekte zweiter Ordnung und braucht dementsprechend keine großen Leistungen erbringen zu können. Es kann beispielsweise eine Heizmanschette an einer bestimmten Leitung oder eine in die Flüssigkeit hineinragende kleine Heizpatrone genügen.

Um die in der Zuleitung zu den Lagertaschen notwendige Drosseleinrichtung von der Viskosität und damit der Temperatur der Druckflüssigkeit unabhängig zu machen, kann sich die Verwendung einer Biende statt einer Drosselbohrung empfehlen, d.h. einer Anordnung, bei der der enge Querschnitt nur eine geringe Erstrekkung in Längsrichtung der Zuleitung aufweist (Anspruch 3).

In der Zeichnung sind Ausführungsbeispiele der Erfindung schematisch dargestellt.
Fig. 1 ist ein Längsschnitt durch eine erfindungsgemäße Walze;
Fig. 2 ist ein Längsschnitt durch ein einzelnes der in Fig. 1 erkennbaren Stützelemente;
Fig. 3 ist eine Ansicht auf das Stützelement von Fig. 2, von oben;
Fig. 4 ist eine Darstellung einer Walze mit gemeinsamer Heizeinrichtung und gruppenweise nachgeschalteten Einzel Heizeinrichtungen.

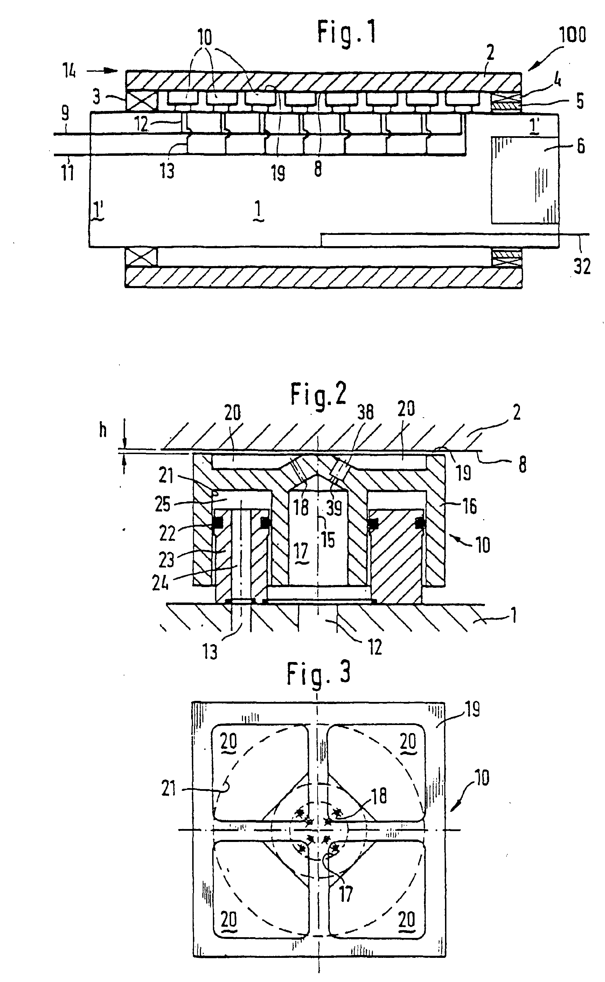

Die in Fig. 1 als Ganzes mit 100 bezeichnete Walze umfaßt ein undrehbares Querhaupt 1, welches eine umlaufende Hohlwalze 2 der Länge nach mit allseitigem Abstand durchgreift. Die aus der Hohlwalze 2 hervorstehenden Enden 1'des Querhaupts 1 sind in einer nicht wiedergegebenen Weise in einem Walzenständer oder den Schwingen eines Kalanders oder in ähnlicher Weise gelagert.

Bei der in Fig. 1 am linken Ende der Hohlwalze 2 wiedergegebenen Ausführungsform ist die Hohlwalze 2 über ein Wälzlager 3 auf dem Querhaupt 1 gelagert. Am rechten Ende der Hohlwalze 2 ist eine Ausführungsvariante dargestellt. bei der die Hohlwalze 2 über ein Lager 4 auf einem Ring 5 gelagert ist, der sich gegenüber dem Querhaupt 1 von oben nach unten etwas verlagern, jedoch nicht drehen kann. Es ist an dem Querhaupt 1 eine Geradführung in Gestalt zweier einander gegenüberliegender Abflachungen 6 des Querhaupts 1 vorgesehen, an denen der Führungsring 5 mit entsprechenden nicht wiedergegebenen Führungsflächen gleiten kann. Das Lager 3 vermag Kräfte in Wirkrichtung der Walze 100 von der Hohlwalze 2 auf das Querhaupt 1 zu übertragen, das Lager 4 hat nur Führungsaufgaben senkrecht zur Wirkebene. In der Wirkebene können wegen der Verlagerbarkeit des Führungsringes 5 keine Kräfte von der Hohlwalze 2 auf das Querhaupt weitergegeben werden. Es versteht sich, daß bei einer praktischen Walze die Ausbildung an den beiden Enden der Hohlwalze gleich ist. Die Darstellung in Fig. 1 dient nur der Erläuterung der Walzentypen, für die die Erfindung in Betracht kommt.

In dem Ausführungsbeispiel der Fig. 1 sind über die Länge der Hohlwalze 2 acht Stützelemente 10 in gleichmässigen Abständen verteilt angeordnet, die am Querhaupt 1 abgestützt sind und mit ihrer Stützfläche gegen den Innenumfang 8 der Hohlwalze 2 anliegen. Die Stützelemente 10 werden über gemeinsame Zuleitungen 9,11 und jeweils zu den einzelnen Stützelementen 10 abzweigende Zweigleitungen 12,13 mit zwei getrennten Druckflüssigkeiten versorgt, die einerseits die Stützelemente 10 gegen den Innenumfang 8 der Hohlwalze 2 anpressen und andererseits die Lagerung der Stützelemente 10 an diesem Innenumfang 8 übernehmen.

In dem in Fig. 1 wiedergegebenen Ausführungsbeispiel ist der Walzspalt 14 oben gelegen, d.h. eine Gegenwalze liegt von oben gegen den arbeitenden Außenumfang der Hohlwalze 2 an. Dadurch ergibt sich für die Hohlwalze 2 eine Strekkenlast, die im inneren Bereich ihrer Längenerstreckung von den Stützelementen 10 abgefangen und auf das Querhaupt 1 weitergeleitet wird, welches sich unter dieser Streckenlast durchbiegt, wodurch die Hohlwalze 2 von belastungsbedingten Formänderungen freigehalten werden kann.

In Fig. 2 ist ein einzelnes Stützelement 10 dargestellt. Es besitzt eine Achse 15, die zur Wirkrichtung parallel ist und in der eine zentrale nicht durchgehende Bohrung 17 angebracht ist, von deren in Fig. 2 oberem Ende in dem auf der linken Seite dargestellten Ausführungsbeispiel Drosselkanäle 18 ausgehen, die in die Lagertaschen 20 münden. Das Gehäuse 16 des Stützelements 10 hat einen etwa quadratischen Grundriß, wie aus Fig. 3 ersichtlich ist, und ist an seiner dem Innenumfang 8 der Hohlwalze 2 zugewandten, die Stützfläche bildenden Anlagefläche 19 dem Innenumfang 8 entsprechend gewölbt, d.h. zylindrisch mit einem dem Innenumfang 8 entsprechenden Durchmesser und zurAchse 15 senkrechter Achse.

In der Anlagefläche 19 sind vier voneinander getrennte, ringsum berandete flache Lagertaschen 20 ausgearbeitet, die über je eine der Drosselbohrungen 18 mit der Bohrung 17 in Verbindung stehen. Das Vorhandensein von vier Lagertaschen 20 dient der Stabilisierung des Stützelements 10 im Sinne der Anlage an dem Innenumfang 8 unter gleichmäßiger Spaltbreite h (Fig. 2).

Drosselbohrungen sind in ihrer Drosselwirkung viskositätsabhängig. Die Viskosität der in Betracht kommenden Druckflüssigkeiten hängt wiederum von deren Temperatur ab. Wenn also die Bohrung 17 mit Druckflüssigkeiten unter gleichem Druck, jedoch unterschiedlicher Temperatur beschickt wird, ist der in den Drosselbohrungen 18 auftretende Druckabfall unterschiedlich und ergibt sich eine Rückwirkung auf den Druck in den Lagertaschen 20. Um dies zu vermeiden, können als Drosselelement Blenden eingesetzt werden, die einen Drosseleffekt ergeben, der von der Viskosität weitgehend unabhängig ist. Als alternatives Drosselelement ist daher auf der rechten Seite der Bohrung 17 in Fig. 2 in dem Zuleitungskanal 38 zu der rechten Lagertasche 20 eine Blende 39 gezeigt. Die Blende 39, die in der Praxis natürlich bei allen vier Lagertaschen 20 eingesetzt würde, empfiehlt sich, wenn den einzelnen Stützelementen Druckflüssigkeit mit sich stärker ändemder Temperatur zugeführt werden muß, ohne daß die Druckverteilung in Mitleidenschaft gezogen werden darf.

Gemäß Fig. 2 unterhalb der Lagertaschen 20 ist in dem Gehäuse 16 ein zur Achse 15 konzentrischer Ringzylinder 21 ausgebildet, in welchen ein über Dichtungen 22 abgedichteter, auf der Oberseite des Querhaupts 1 dicht befestigter Ringkolben 23 eingreift. Das Gehäuse 16 des Stützelements 10 kann sich also auf dem Ringkolben 23 parallel zur Achse 15 verlagern.

Der Ringkolben 23 besitzt eine achsparallele Bohrung 24, die mit einer Zweigleitung 13 in Verbindung steht, so daß die oberhalb des Ringkolbens 23 gebildete, bis auf die Bohrung 24 geschlossene Druckkammer 25 an die Zuleitung 11 angeschlossen ist. Die gegen das Innere des Ringkolbens 23 offene Bohrung 17 hingegen steht mit der dort mündenden Zweigleitung 12 und auf diese Weise mit der Zuleitung 9 in Verbindung.

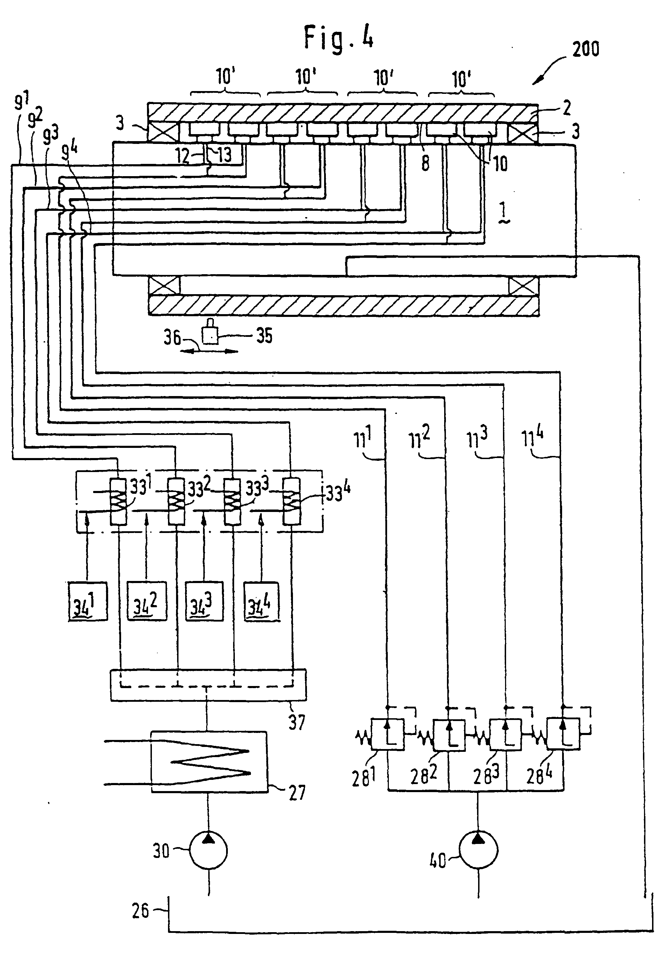

In Fig. 4 ist eine weiterentwickelte Ausführungsform in Gestalt einer Walze 200 dargestellt. Die acht Stützelemente 10 sind in vier Gruppen 10' jeweils einander benachbarter Stützelemente 10 zusammengefaßt, die eigene Zuleitung 9¹, 11¹;9²,11²;... für die Druckflüssigkeit der Lagertaschen 20 bzw. der Druckkammern 25 aufweisen.

Die mengengeregelte Pumpe 30 entnimmt ihre Flüssigkeit dem Vorratsbehälter 26 und bringt sie auf einen vom Gegendruck abhängigen nicht festliegenden Druck. Sie schickt einen bei allen Gegendrücken gleichbleibenden Volumenstrom dieser Druckflüssigkeit durch den Wärmetauscher 27 und dann in den Verzweiger 37, wo der Volumenstrom gleichmäßig auf die vier Zuleitungen 9¹,9²,9³,9⁴ aufgeteilt wird, die den vier Gruppen 10' zugeordnet sind. Bevor die Druckflüssigkeit in die einzelnen Stützelemente 10 gelangt, passiert sie Einzeltemperiereinrichtungen 33¹,33²,33³,33⁴, von denen je eine in jeder der Zuleitungen 9¹,.. angeordnet ist. Die Einrichtungen 33¹,... werden durch Steuereinheiten 34¹,34²,34³,34⁴ gesteuert, die ihre Signale von einem nicht dargestellten Rechner erhalten, der Meßwerte von einer Temperaturmeßvorrichtung 35 erhält, die im Sinne des Pfeiles 36 entlang der Außenseite der Hohlwalze 2 hin- und herbewegt wird und deren Temperaturverteilung erfaßt. Der nicht dargestellte Rechner berechnet die an der Temperatur der Durckflüssigkeit in den einzelnen Leitungen 9¹,.. vorzunehmenden Änderungen, um die Temperaturverteilung längs der Hohlwalze 2 wieder in den gewünschten, beispielsweise gleichmäßigen Verlauf zurückzubringen.

Den vier Gruppen 10' von Stützelementen 10 sind auch vier unabhängig voneinander betätigbare Druckeinstellventile 28¹,28²,28³,28⁴ zugeordnet, die die von der Pumpe 40 erzeugte Druckflüssigkeit in den Zuleitungen 11¹,11²,11³,11⁴ unabhängig voneinander auf gewünschte Drücke bringen können. Eine Anderung in der durch entsprechende Betätigung der Druckeinstellventile 28¹,... herbeiführbaren Liniendruckverteilung ändert an der Temperaturverteilung nichts, weil die an den einzelnen Stützelementen 10 austretende Druckflüssigkeitsmenge immer gleich bleibt.

Natürlich kann die an den Einrichtungen 33¹,... vorgenommene Beeinflussung der Temperaturverteilung sowohl dazu dienen, eine über die Länge der Hohlwalze 2 möglichst gleichmäßige Temperatur herzustellen, als auch dazu, eine gezielt ungleichmäßige Temperaturverteilung, beispielsweise mit Temperaturabsenkung oder -anhebung am Rande, zu bewerkstelligen.

## Patentansprüche

1. Hydrostatisch innenabgestützte Walze (100,200) mit einer umlaufenden, den arbeitenden Walzenumfang bildenden Hohlwalze (2),
mit einem die Hohlwalze (2) der Länge nach durchgreifenden, ringsum Abstand vom Innenumfang (8) der Hohlwalze (2) belassenden, undrehbaren Querhaupt (1),
mit mehreren in einer oder mehreren Reihen längs des Querhauptes (1) an diesem abgestützten, mittels einer Druckflüssigkeit gegen den Innenumfang der Hohlwalze (2) anpreßbaren hydrostatischen Stützelementen (10), welche in ihrer Anlagefläche gegen den Innenumfang (8) der Hohlwalze offene, ringsrum berandete Lagertaschen (20) aufweisen, die mit Druckflüssigkeit füllbar sind, die den Anpreßdruck auf den Innenumfang (8) der Hohlwalze (2) überträgt,
mit einer jedem Stützelement (10) zugeordneten, mit Druckflüssigkeit füllbaren Druckkammer (25) zum Anpressen des jeweiligen Stützelements (10) an den Innenumfang (8) der Hohlwalze (2) mit einer einstellbaren Kraft und mit einer Heizeinrichtung (27) für die den Lagertaschen (20) zugeführte Druckflüssigkeit,
**dadurch gekennzeichnet,**
**daß** bei mindestens einem Stützelement (10) die Druckkammer (25) von den Lagertaschen (20) getrennt und für die den Lagertaschen (20) zugeführte Druckflüssigkeit eine Mengenregeleinrichtung (30) vorgesehen ist, die bei allen Gegendrücken stetz eine Konstante Menge an Druckflüssigkeit abgibt und
**daß** der gemeinsamen Heizeinrichtung (27) in der Zuleitung (9¹,9²,9³,9⁴) zu mindestens einem Stützelement (10) eine Einzel Heizeinrichtung (33¹,33², 33³,33⁴) nachgeschaltet ist.

2. Walze nach Anspruch 1, **dadurch gekennzeichnet, daß** die zu den Lagertaschen (20) mehrerer Stützelemente (10) führenden Zweigleitungen (12) an eine gemeinsame Zuleitung (9) mit einer gemeinsamen Heizeinrichtung (27) angeschlossen sind.

3. Walze nach Anspruch 1 order 2, **dadurch gekennzeichnet, daß** bei mindestens einer Lagertasche (20) in dem Zuleitungskanal (38) für die Druckflüssigkeit eine Blende (39) angeordnet ist.

## Claims

1. Roller (111, 200) which is internally supported by hydrostatic means and has a rotating shell (2) forming the working roller circumference,
with a non-rotatable beam (1) which passes through the shell (2) lengthwise and leaves a spacing all round with respect to the internal circumference (8) of the shell (2),
with a plurality of hydrostatic support elements (10) which are supported at the beam (1) in one or a plurality of row(s) along the latter, can be pressed by means of a hydraulic fluid against the internal circumference of the shell (2) and which comprise in their contact surface bearing pockets (20) which are open towards the internal circumference (8) of the shell, are edged all round and can be filled with hydraulic fluid which transmits the contact pressure to the internal circumference (8) of the shell (2),
with a pressure chamber (25), which is associated with each support element (10) and can be filled with hydraulic fluid, for pressing the respective support element (10) against the internal circumference (8) of the shell (2) with an adjustable force,
and with a heating device (27) for the hydraulic fluid which is supplied to the bearing pockets (20),
**characterised in that**, at least in the case of one support element (10), the pressure chamber (25) is separate from the bearing pockets (20) and a flow control device (30) is provided for the hydraulic fluid supplied to the bearing pockets (20), which device always delivers a constant quantity of hydraulic fluid at all counter-pressures, and
**in that** an individual heating device (33¹,33², 33³,33⁴) is connected downstream of the common heating device (27) in the feed line (9¹,9²,9³,9⁴) leading to at least one support element (10).

2. Roller according to claim 1, **characterised in that** the branch lines (12) leading to the bearing pockets (20) of a plurality of support elements (10) are connected to a common feed line (9) with a common heating device (27).

3. Roller according to claim 1 or 2, **characterised in that** a restrictor (39) is disposed in the feed channel (38) for the hydraulic fluid, at least in the case of one bearing pocket (20).

## Revendications

1. Rouleau à support hydrostatique inteme (100, 200) comportant un cylindre creux, toumant, formant la périphérie active d'un cylindre creux (2), avec une traverse (1), non rotative, passant dans le cylindre creux (2), sur toute sa longueur, en laissant à sa périphérie une distance par rapport à la périphérie intérieure (8) comprenant
- plusieurs éléments d'appui hydrostatiques (10) s'appuyant contre la traverse (1), en étant disposés le long de celle-ci en une ou plusieurs rangées, avec un fluide sous pression, pour être appliqués contre la périphérie intérieure du cylindre creux (2), ces éléments ayant dans leur surface d'appui, tournée vers la périphérie intérieure (8) du cylindre creux, des poches de palier (20), ouvertes, réparties dans la direction annulaire, et pouvant recevoir un liquide sous pression, pour transmettre la pression d'application à la périphérie intérieure (8) du cylindre creux (2),
- une chambre de pression (25) associée à chaque élément d'appui (10) recevant un liquide comprimé, pour presser l'élément d'appui (10) respectif contre la périphérie intérieure (8) du cylindre creux (2), avec une force réglable ainsi qu'une installation de chauffage (27) pour le liquide sous pression alimentant les poches (20) de paliers,
**caractérisé en ce que** pour au moins un élément d'appui (10), la chambre de pression (25) est séparée des poches de palier (20) et pour le liquide sous pression alimentant les poches formant paliers (20) il est prévu une installation de réglage de débit (30) qui fournit toujours une quantité constante de liquide sous pression quelle que soit la contre pression, et
**en ce que** l'installation de chauffage commune (27) de la conduite d'alimentation (9¹, 9², 9³, 9⁴) d'au moins un élément d'appui (10) est suivie d'une installation de chauffage (33¹, 33², 33³, 33⁴) séparée.

2. Rouleau selon la revendication 1, **caractérisé en ce que** les conduites de dérivation (12) aboutissant aux différentes poches de palier (20) de plusieurs éléments d'appui (10) sont raccordées à une conduite d'alimentation (9) commune munie d'une installation de chauffage (27) commune.

3. Rouleau selon revendication 1 où 2, **caractérisé en ce qu'**au moins pour une poche de palier (20) le canal d'alimentation (38) en liquide sous pression comporte un diaphragme (39).
